# EUROPEAN PATENT SPECIFICATION

(11) **EP 3 369 898 B1**
(45) Date of publication and mention of the grant of the patent: **16.10.2019**
(21) Application number: 18159681.8
(22) Date of filing: 02.03.2018
(51) Int. Cl.: F01N 3/10, F01N 13/00, F01N 3/20

(54) **AFTER TREATMENT SYSTEM (ATS) FOR A SPARKING IGNITION ENGINE**
NACHBEHANDLUNGSSYSTEM (ATS) FÜR EINEN OTTOMOTOR
SYSTÈME DE POST-TRAITEMENT (ATS) POUR UN MOTEUR À ALLUMAGE PAR ÉTINCELLE

(30) Priority: 02.03.2017 IT 201700023737
(43) Date of publication of application: 05.09.2018
(73) Proprietor: FPT Motorenforschung AG, 9320 Arbon (CH)
(72) Inventor: GSTREIN, Wolfgang, 6900 Bregenz (AT); DELLORA, Giancarlo, 10134 Torino (IT)
(74) Representative: Fiume, Orazio

(56) References cited:
- EP-A1- 2 055 909
- EP-A1- 2 354 485
- WO-A1-2012/075432
- US-A1- 2009 260 349
- US-A1- 2010 043 402

## Description

### Field of the invention

The present invention relates to an After Treatment System (ATS) for a spark ignition engine and to a spark ignition engine comprising the same, wherein the ATS includes a three-way catalyst (3WC) and a selective catalytic reduction (SCR) arranged downstream of the 3WC according to WO2012075432, whose features are in the preamble of claim 1. Such systems are disclosed for example in documents WO 2012/075432 A1 or US 2010/0043402 A1.

### Description of the prior art

Sparking ignition engines are internal combustion engines operating according to an Otto cycle. Generally, they are referred to as petrol engines or gasoline engines.

The combustion process of the air-fuel mixture is ignited by a spark from a spark plug. They are operated in stoichiometric condition and a three-way catalyst is associated to its exhaust pipe to threat the exhaust gas produced by the internal combustion engine.

The three-way catalyst (3WC) operation is strictly conditioned by the absence of oxygen in the exhaust gas that can be achieved only with stoichiometric mixture fuel/air.

This implies that lean burn operation is forbidden, if a three-way catalyst is implemented, due to its incapacity to properly convert NOx in presence of O2.

### Summary of the invention

The main object of the present invention to provide an After Treatment system based on a three-way catalyst, capable to convert NOx even in lean burn operation of the internal combustion engine.

The main idea of the present invention is to provide for an ATS comprising as first device, according to an exhaust gas flow, a three way catalyst followed by an SCR or SCRoF.

An SCR is a well-known acronym indicating Selective Catalytic reduction device, while SCRoF indicates that the SCR is also configured to trap particle matter.

An SCR (or SCRoF) is implicitly active, being preceded by a urea-based agent dosing module, in contrast to a "passive SCR" where ammonia is generated through preceding catalysis operations.

An alternative technology to the SCRoF is the SCRT®, developed by Eminox®, and combining a CRT (Continuously Regeneration Trap) and an SCR usually adopted in Diesel engines.

According to another preferred embodiment of the invention, between the three-way catalyst and an SCR a DPF (which is meant to be a GPF in the sparking ignition engine environment) is arranged. The DPF/GPF is a well known particulate trap.

According to a preferred embodiment of the invention the three-way catalyst is coated such that to operate as a DOC (Diesel oxidation catalyst) and it could be without any coating or if a coating is present, it is suitable to improve CO/HC conversion and NO2 formation also in lean burn condition. The implementation of DOC is known in the diesel engines for these tasks.

Another object of the invention is to propose a method for managing such ATS such that it adjusts its functioning mode according to the mixture fuel/air supplied to the internal combustion engine (predictive) and according to the oxygen content contained in the exhaust gas (measure-based). According to a preferred embodiment of the invention, the ATS is managed in order to inject a urea-based agent only when the combustion engine is in lean burn operation.

Said urea-based agent is metered according to an oxygen content predicted and/or measured in the exhaust gas. Therefore, instead to monitor the oxygen content in order to adjust the fuel injection, the oxygen monitoring represents the basis for a urea-based agent injection. More, preferably, the urea-based agent injection is metered on the basis additionally of a NOx sensor arranged downstream of the three-way catalyst, while the oxygen sensor is arranged upstream of the three-way catalyst in order to have a first measurement of the oxygen content.

A three-way catalyst model can be implemented, for example per se known, to estimate the unconverted NOx amount going to reach the following SCR (SCRT/SCRoF), in order to accurately dose the urea-based agent. Thus, the output of such model can be used as input of a control scheme of the dosing of the urea-based agent.

The SCR (or SCRT or SCRoF) can be modelled too, in order to avoid NH3 slippage. A clean up catalyst could also be implemented downstream of the SCR or SCRoF.

Advantageously, the sparking combustion engine can be operated in lean burn with a relevant fuel saving.

Another object of the invention is a spark-ignition engine comprising the above ATS and a control unit programmed to control the engine also in lean burn operation.

### Brief description of the drawings

The invention will become fully clear from the following detailed description, given by way of a mere exemplifying and non limiting example, to be read with reference to the attached drawing figures, wherein:
- Fig. 1 shows a first embodiment of the invention,
- Fig. 2 shows a second embodiment of the invention,
- Figgs. 3 and 4 show a third and a fourth embodiments of the invention based on the embodiment of figure 2.
The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

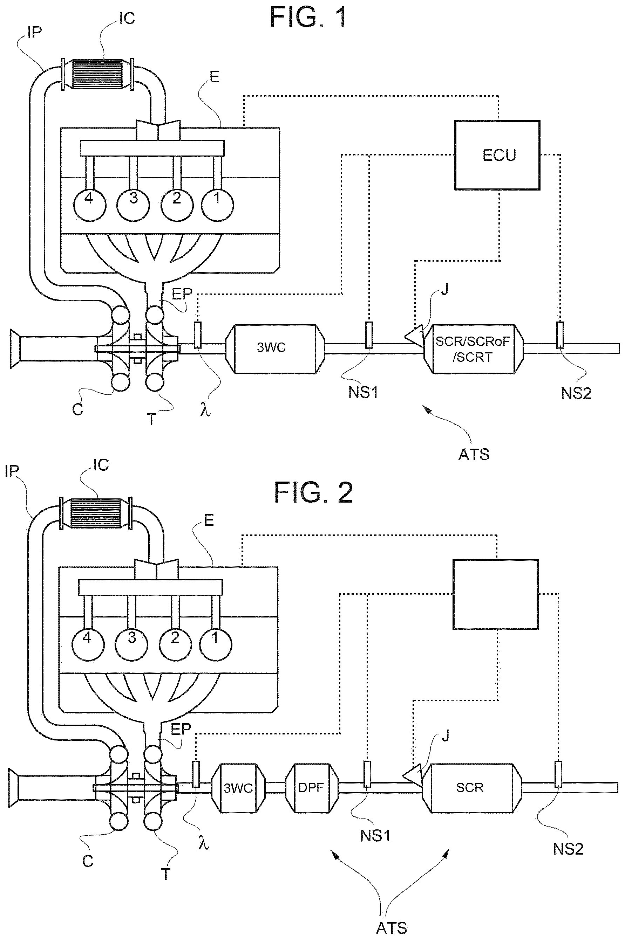

Figures 1 - 4 disclose an internal combustion engine E, preferably four-stroke type, wherein a spark plug (not shown) commands the ignition.

It comprises, for example four cylinders 1 - 4, however, their number is not relevant.

The internal combustion engine has an intake pipe IP and an exhaust pipe EP. Fresh air is sucked through the intake pipe, and then it is mixed with fuel such as gasoline or LPG or natural gas or CNG. Fuel injectors are associated to the combustion engine to dose the fuel in the cylinders 1 - 4.

The exhaust gas, as known, is delivered to the ambient through an exhaust line EP to which an after-treatment system ATS is connected in order to reduce the pollutants contained in the exhaust gas.

Preferably, the engine has a turbocharger comprising a compressor C arranged on the intake line to compress the fresh air and a turbine T arranged on the exhaust line EP arranged to exploit the energy content in the exhaust gas to drive in rotation the compressor.

According to the present invention, the ATS comprises a three-way catalyst 3WC followed by an SCR or SCRoF (or SCRT) device and its own doser J to introduce a urea-based agent (immediately) upstream of the SCR or SCRoF or a SCRT®.

The terms "following", "upstream", "downstream" shall be interpreted according to the exhaust gas circulation from the internal combustion engine to the environment.

The ATS could also comprise a muffler (not shown) to silence the noise produced by the internal combustion engine.

The ATS can have a control unit capable to control autonomously the doser J according to a lean burn operating condition of the internal combustion engine.

The doser can be inactive, namely non operative, when it does not introduce urea-based agent. In contrast, the doser is operative when it meters the introduces said urea-based agent by metering it according to the control operated by said control unit.

In particular, the ATS comprises a lambda sensor arranged upstream of the three-way catalyst to detect the presence of oxygen, thus the control unit operates the doser J in order to neutralize NOx unconverted by the 3-way catalyst due to the presence of oxygen. A model of the 3WC is implemented in order to estimate its efficiency and consequently to control said doser J.

According to another preferred embodiment of the invention that can be combined with the previous one, the ATS comprises (also) a first NOx sensor NS1 arranged downstream of the three-way catalyst and connected to said control unit, the latter being suitably configured to operate the doser J in order to neutralize NOx unconverted by the 3-way catalyst due to the presence of oxygen.

According to a preferred embodiment of the invention, said control unit is operatively integrated in the engine control unit ECU programmed to operate the internal combustion engine.

This embodiment permits to have an early knowledge of the operating conditions of the combustion engine, being the ECU configured to manage the fuel/air mixture introduced in the internal combustion engine. Therefore, the amount of unconverted NOx can be estimated in an earlier stage.

A second NOx sensor NS2 can be arranged downstream of the SCR to improve the robustness of the urea-injection control.

Figure 2 shows an alternative to figure 1, where the particulate trap DPF is an autonomous device with respect to the SCR and is arranged between the three-way catalyst and the SCR.

When the internal combustion engine operates according to a lean burn the 3WC operates as a DOC to convert HC and CO and to provide a sufficient amount of NO2 to help passive soot regeneration of DPF or SCRoF or SCRT and to provide for sufficient NO2/NOx ratio promoting the "fast SCR-reduction".

According to a preferred embodiment of the invention the three-way catalyst is preferably, but not necessarily coated to convert CH/CO and produce NO2 as discussed above. When the air/fuel provided to the internal combustion engine is stoichiometric, the 3WC is able to autonomously purify the exhaust gas produced by the internal combustion engine, thus no urea-based agent is required. Thus, the ATS is managed in order to inject a urea-based agent only when the combustion engine is in lean burn operation. More preferably, said urea-based agent is metered according to an oxygen and/or NOx content measured or estimated in the exhaust gas.

It should be understood that the urea nozzles needs to be refreshed (cooled). Therefore, occasionally urea-based reducing agent is introduced in the SCR not for achieving pollutants reduction, rather to preserve the functionality of the nozzle. However, these occasionally injections has nothing to do with the control strategy depicted in the present description.

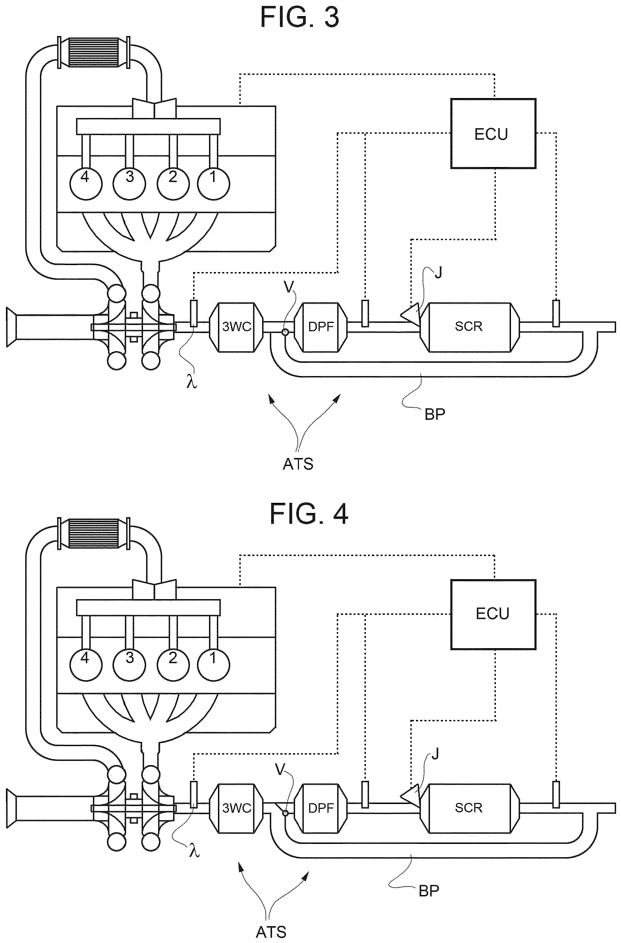

Figure 3 and 4 disclose two opposite operating condition of another embodiment of the invention mainly based on figure 2, however it can easily construed on the basis of the scheme of figure 1.

Such figures disclose a bypass pipe BP arranged to by-pass at least the SCR. The figures disclose that, preferably, also the DPF is bypassed.

A valve V is arranged at the point immediately downstream of the 3WC to activate/deactivate the bypassing of the SCR (and DPF).

Advantageously, both the SCR and its doser is bypassed, therefore, the above mentioned occasional injections can be avoided.

According to said embodiment, the valve is commanded such that, see figure 3, the exhaust gas crosses the SCR only when unconverted NOx are delivered by the 3WC, namely in lean burn operation of the internal combustion engine.

On the contrary, when the combustion engine is supplied with a stoichiometric mixture, the bypass is operated to convey exhaust gas to the muffler.

According to a preferred embodiment of the invention, the doser and the bypass (if present) is controlled on the basis of NOx thresholds.

None of the previous schemes disclose EGR devices, usually comprising a pipe to connect the exhaust line with the intake line, a valve to meter the exhaust gas recirculation, and preferably a cooler to refresh recirculated gasses. However, such technology can be advantageously implemented in the context of the present invention and the EGR valve can be suitably controlled during lean burn operation of the combustion engine to reduce the engine NOx production.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. After Treatment System (ATS) for a sparking ignition engine comprising
- a three-way catalyst (3WC) and
- a selective Catalytic reduction device (SCR) comprising a doser (J) arranged immediately upstream of the SCR to introduce an urea-based agent therein,
wherein said 3WC is arranged upstream of said SCR according to a gas flow direction;
the system comprising a control unit and a lambda sensor (λ) operatively associated with said control unit, wherein said lambda sensor is arranged upstream of said 3WC to measure an oxygen content in exhaust gas entering in the ATS and **characterized in that** said control unit is programmed to estimate NOx delivered by said 3WC on the basis of said measured oxygen content, in order to control said doser (J) operation.

2. ATS according to claim 1, wherein said doser is arranged to introduce said urea-based agent to neutralize unconverted NOx delivered by said 3WC.

3. ATS according to any one of previous claims, wherein in said control unit an 3WC model is implemented to estimate the unconverted NOx amount going to reach the following SCR (SCRT/SCRoF), in order to accurately dose the urea-based agent.

4. ATS according to any one of previous claims, further comprising a NOx sensor (NS1, NS2) arranged immediately downstream of said 3WC and/or downstream of said SCR to estimate NOx respectively entering and/or outgoing the SCR to adjust said doser (J) operation.

5. ATS according to any one of previous claims, wherein said SCR comprises particulate trap properties (SCRoF, SCRT) or wherein a DPF is arranged between the 3WC and the SCR.

6. ATS according to any of previous claims, further comprising a bypass pipe (BP) and a relative valve (V) arranged downstream of said 3WC to bypass at least said SCR when said doser (J) is not operative.

7. Sparking ignition engine comprising an inlet line (IP) and an exhaust line (EP) and
- an ATS, according to any one of the previous claims 1 - 6, operatively connected to said exhaust line to purify exhaust gas produced by the engine and
- an engine control unit (ECU) programmed according to any one of the previous claims 1 - 6 to cause said engine to operate in lean burn at least temporarily.

8. Engine according to claim 7, wherein the 3WC is optimized to convert HC/CO and to produce NO2 when said combustion engine is in lean burn operation and wherein the 3WC is optimized to convert CH4 originated from flame quenching of a premixed gas in cylinder crevices as e.g. in piston top land gap when said combustion engine is supplied by natural gas.

9. Engine according to claim 7 or 8, wherein said control unit is also programmed to control said valve (V), according to claim 6, to bypass at least said SCR, when the mixture fuel/air supplied to the engine is stoichiometric.

10. Method for purifying exhaust gas produced by a sparking ignition engine at least temporarily operating in lean burn and comprising an engine according to any one of previous claims from 7 to 9 comprising a step of neutralize unconverted NOx delivered by said 3WC when the engine is in lean burn operation, including estimation of NOx delivered by said 3WC on the basis of oxygen content measured upstream of said ATS by said lambda sensor, in order to control said doser (J) operation.

## Patentansprüche

1. Nachbehandlungssystem (ATS) für eine Funkenzündungskraftmaschine, das Folgendes umfasst:
- einen Dreiwegekatalysator (3WC) und
- eine selektive katalytische Reduzierungsvorrichtung (SCR), die einen Dosierer (J) enthält, der unmittelbar stromaufseitig der SCR angeordnet ist, um in sie einen Wirkstoff auf Harnstoffbasis einzuleiten,
wobei der 3WC in Bezug auf die Gasdurchflussrichtung stromaufseitig der SCR angeordnet ist;
wobei das System eine Steuereinheit und einen Lambdasensor (λ), der der Steuereinheit betriebstechnisch zugeordnet ist, umfasst, wobei der Lambdasensor stromaufseitig des 3WC angeordnet ist, um einen Sauerstoffgehalt im Abgas, das in das ATS eintritt, zu messen, **dadurch gekennzeichnet, dass** die Steuereinheit programmiert ist, das NOₓ, das von dem 3WC geliefert wird, anhand des gemessenen Sauerstoffgehaltes zu schätzen, um den Betrieb des Dosierers (J) zu steuern.

2. ATS nach Anspruch 1, wobei der Dosierer dafür ausgelegt ist, den Wirkstoff auf Harnstoffbasis einzuleiten, um nicht umgewandeltes NOₓ, das durch den 3WC geliefert wird, zu neutralisieren.

3. ATS nach einem der vorhergehenden Ansprüche, wobei in der Steuereinheit ein 3WC-Modell implementiert ist, um die Menge von nicht umgewandeltem NOₓ, die die folgende SCR (SCRT/SCRoF) erreichen würde, zu schätzen, um den Wirkstoff auf Harnstoffbasis genau zu dosieren.

4. ATS nach einem der vorhergehenden Ansprüche, das ferner einen NOₓ-Sensor (NS1, NS2) umfasst, die direkt stromabseitig des 3WC und/oder stromabseitig der SCR angeordnet sind, um NOₓ, das in die SCR eintritt und/oder aus der SCR austritt, zu schätzen, um den Betrieb des Dosierers (J) einzustellen.

5. ATS nach einem der vorhergehenden Ansprüche, wobei die SCR Partikeleinfangeigenschaften (SCRoF, SCRT) aufweist oder wobei zwischen dem 3WC und der SCR ein DPF angeordnet ist.

6. ATS nach einem der vorhergehenden Ansprüche, das ferner ein Umgehungsrohr (BP) und ein Relativventil (V), die stromabseitig des 3WC angeordnet sind, um wenigstens die SCR zu umgehen, wenn der Dosierer (J) nicht in Betrieb ist, umfasst.

7. Funkenzündungskraftmaschine, die eine Einlassleitung (IP) und eine Abgasleitung (EP) aufweist und Folgendes umfasst:
- ein ATS nach einem der vorhergehenden Ansprüche 1-6 umfasst, das mit der Abgasleitung betriebstechnisch verbunden ist, um Abgas, das durch die Kraftmaschine erzeugt wird, zu reinigen, und
- eine Kraftmaschinensteuereinheit (ECU), die gemäß einem der vorhergehenden Ansprüche 1-6 programmiert ist, um die Kraftmaschine zu veranlassen, wenigstens vorübergehend in einem Magerverbrennungsbetrieb zu arbeiten.

8. Kraftmaschine nach Anspruch 7, wobei der 3WC optimiert ist, HC/CO umzuwandeln und NO₂ zu erzeugen, wenn die Brennkraftmaschine im Magerverbrennungsbetrieb ist, und wobei der 3WC optimiert ist, CH₄, das vom Flammenlöschen eines Vormischgases in Zylinderspalten wie beispielsweise in Kolbenoberseiten-Stegspalten stammt, wenn die Brennkraftmaschine mit Erdgas versorgt wird, umzuwandeln.

9. Kraftmaschine nach Anspruch 7 oder 8, wobei die Steuereinheit außerdem programmiert ist, das Ventil (V) gemäß Anspruch 6 zu steuern, um wenigstens die SCR zu umgehen, wenn das Kraftstoff/Luft-Gemisch, das der Kraftmaschine zugeführt wird, stöchiometrisch ist.

10. Verfahren zum Reinigen von Abgas, das durch eine Funkenzündungskraftmaschine erzeugt wird, die wenigstens vorübergehend in einem Magerverbrennungsbetrieb betrieben wird und eine Kraftmaschine nach einem der vorhergehenden Ansprüche 7 bis 9 enthält, das einen Schritt des Neutralisierens von nicht umgewandeltem NOₓ, das durch den 3WC geliefert wird, wenn die Kraftmaschine in einem Magerverbrennungsbetrieb ist, umfasst, der das Schätzen von NOₓ, das durch den 3WC geliefert wird, auf der Grundlage des stromaufseitig des ATS durch den Lambdasensor gemessenen Sauerstoffgehalts umfasst, um den Betrieb des Dosierers (J) zu steuern.

## Revendications

1. Système de post-traitement (ATS) pour un moteur à allumage par étincelle comprenant
- un catalyseur à trois voies (3WC) et
- un dispositif de réduction catalytique sélective (SCR) comprenant un doseur (J) agencé immédiatement en amont du SCR pour introduire un agent à base d'urée à l'intérieur de celui-ci,
dans lequel ledit 3WC est agencé en amont dudit SCR selon une direction d'écoulement de gaz ;
le système comprenant une unité de commande et un capteur lambda (λ) associés, de manière à pouvoir fonctionner, avec ladite unité de commande, dans lequel ledit capteur lambda est agencé en amont dudit 3WC pour mesurer une teneur en oxygène d'un gaz d'échappement entrant dans l'ATS et **caractérisé en ce que** ladite unité de commande est programmée pour estimer un NOx livré par ledit 3WC sur la base de ladite teneur en oxygène mesurée, afin de commander le fonctionnement dudit doseur (J).

2. ATS selon la revendication 1, dans lequel ledit doseur est agencé pour introduire ledit agent à base d'urée afin de neutraliser le NOx non converti livré par ledit 3WC.

3. ATS selon l'une quelconque des revendications précédentes, dans lequel, dans ladite unité de commande, un modèle 3WC est mis en oeuvre pour estimer la quantité de NOx non converti qui va atteindre le SCR suivant (SCRT/SCRoF) afin de doser précisément l'agent à base d'urée.

4. ATS selon l'une quelconque des revendications précédentes, comprenant en outre un capteur de NOx (NS1, NS2) agencé immédiatement en aval dudit 3WC et/ou en aval dudit SCR pour estimer le NOx respectivement entrant dans le SCR et/ou sortant du SCR pour ajuster le fonctionnement dudit doseur (J).

5. ATS selon l'une quelconque des revendications précédentes, dans lequel ledit SCR comprend des propriétés de piège à particules (SCRoF, SCRT) ou dans lequel un DPF est agencé entre le 3WC et le SCR.

6. ATS selon l'une quelconque des revendications précédentes, comprenant en outre un tuyau de dérivation (BP) et une vanne relative (V) agencés en aval dudit 3WC pour dériver au moins ledit SCR lorsque ledit doseur (J) n'est pas opérationnel.

7. Moteur à allumage par étincelle comprenant une conduite d'entrée (IP) et une conduite d'échappement (EP) et
- un ATS, selon l'une quelconque des revendications précédentes 1 à 6, raccordé, de manière à pouvoir fonctionner, avec ladite conduite d'échappement pour purifier un gaz d'échappement produit par le moteur, et
- une unité de commande de moteur (ECU) programmée selon l'une quelconque des revendications précédentes 1 à 6 pour amener ledit moteur à fonctionner au moins provisoirement en mélange pauvre.

8. Moteur selon la revendication 7, dans lequel le 3WC est optimisé pour convertir le HC/CO et pour produire du NO2 lorsque ledit moteur à combustion est en fonctionnement en mélange pauvre et dans lequel le 3WC est optimisé pour convertir le CH4 découlant de l'extinction de flamme d'un gaz prémélangé dans des interstices de cylindres, comme par exemple dans un espacement de cordons de segments, lorsque ledit moteur à combustion est alimenté en gaz naturel.

9. Moteur selon la revendication 7 ou 8, dans lequel ladite unité de commande est également programmée pour commander ladite vanne (V), selon la revendication 6, afin de dériver au moins ledit SCR, lorsque le mélange de carburant et d'air fourni au moteur est stoechiométrique.

10. Méthode de purification de gaz d'échappement produit par un moteur à allumage par étincelle fonctionnant au moins provisoirement en mélange pauvre et comprenant un moteur selon l'une quelconque des revendications précédentes 7 à 9, comprenant une étape de neutralisation du NOx non converti livré par ledit 3WC lorsque le moteur est en fonctionnement en mélange pauvre, incluant l'estimation du NOx livré par ledit 3WC sur la base de la teneur en oxygène mesurée en amont dudit ATS par ledit capteur lambda, afin de commander le fonctionnement dudit doseur (J).
